# EUROPÄISCHE PATENTSCHRIFT

(11) **EP 0 381 977 B1**
(45) Veröffentlichungstag und Bekanntmachung des Hinweises auf die Patenterteilung: **05.01.1994**
(21) Anmeldenummer: 90101172.6
(22) Anmeldetag: 20.01.1990
(51) Int. Cl.: C07F 7/18, C08G 77/62

(54) **Umsetzungsprodukte von 2-(Aminoethyl)aminopropylalkoxysilanen mit Chlorsilanen**
Reaction products of 2-(aminoethyl) aminopropyl alkoxysilanes with chlorosilanes
Produits de réaction de 2-(aminoéthyl)aminopropylalkoxysilanes avec des chlorosilanes

(30) Priorität: 04.02.1989 DE 3903339
(43) Veröffentlichungstag der Anmeldung: 16.08.1990
(73) Patentinhaber: BAYER AG, 51368 Leverkusen (DE)
(72) Erfinder: Weber, Wilhelm, Dr., D-5090 Leverkusen 1 (DE); Sockel, Karl-Heinz, D-5090 Leverkusen 1 (DE); Wiskamp, Volker, Dr., D-6100 Darmstadt (DE); Jeremias, Jörg, D-5060 Bergisch Gladbach 1 (DE)

(56) Entgegenhaltungen:
- DE-A- 2 032 432
- GB-A- 1 162 772
- US-A- 3 355 424

## Beschreibung

Die Erfindung betrifft Umsetzungsprodukte von 2-(Aminoethyl)aminopropylalkoxysilanen mit Chlorsilanen, die wenigstens zwei Chloratome am Silicium enthalten, und deren Verwendung als Haftvermittler in 1K-RTV und 2K-RTV Dichtstoffen aus Basis Siliconen, Polyurethanen oder Polyethern (sog. "modified silicone").

Die DE-A-2032432 beschreibt die Umsetzung von 2-(Aminoethyl)aminopropylalkoxysilan mit einem endständige Hydroxylgruppen aufweisenden Phenylmethylpolysiloxan und die Verwendung des so erhaltenen Mischpolymerisats als Haftvermittler.

Eine gängige Methode zur Knüpfung von Si-N-Bindungen ist die Kondensation von Chlorsilanen mit Dialkylaminen unter HC1-Abspaltung, gemäß:

R₃SiCl + HNR₂ → R₃Si-NR₂ + HCl

(R= organische Reste).

Chlorsilane mit mehr als einem Chloratom am Silicium können mit äquivalenten Mengen an Dialkylaminen analog unter Bildung von Verbindungen mit mehreren Si-N-Bindungen reagieren, gemäß:

R₄₋ₓSiClₓ + X HNR₂ → R₄₋ₓSi(NR₂)ₓ + X HCl

Einen Spezialfall dieser Reaktion stellt die Umsetzung von Dichlorsilanen mit N,N′-Dialkylethylendiamin dar, bei der sich Diazasila-cyclopentane bilden. 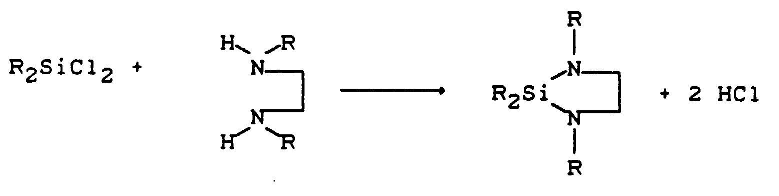
Umsetzungen von Dichlorsilanen mit Ethylendiamin führen ebenfalls zu Verbindungen mit Diaza-silacyclopentan-Einheiten. Diese sind wegen der beiden gegenüber N,N′-Dialkylethylendiaminen zusätzlichen kondensierbaren aminischen Wasserstoffatome durch R₂Si-Gruppen miteinander verbunden, so daß Polymere resultieren: 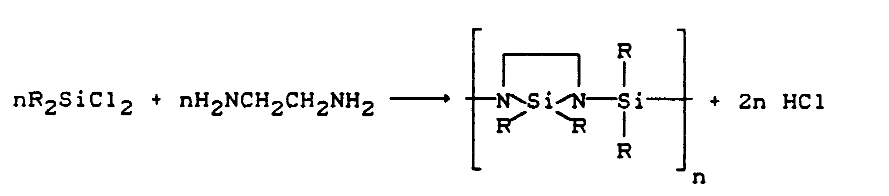
(s. W. Fink, Helv. Chim. Acta, 50, 1131 (1967)).

Die Umsetzungen der genannten Amine mit Chlorsilanen werden in Gegenwart eines Säure-Fängers durchgeführt.

Als Säurefänger kann ein Überschuß des umzusetzenden Amins selbst oder es können auch andere Basen, z.B. Aminbasen wie Triethylamin, verwendet werden.

Gegenstand der vorliegenden Erfindung sind Umsetzungsprodukte von 2-(Aminoethyl)aminopropylalkoxsilanen der allgemeinen Formel

H₂NCH₂CH₂NHCH₂CH₂CH₂Si(OR¹)ₘR²₃₋ₘ

mit
R¹ und R² = Alkyl, Cycloalkyl, Alkenyl, Cycloalkenyl (mit jeweils 1-8 C-Atomen)
wobei
R¹ und R² gleich oder verschieden sein können und m die Werte 2 und 3 annehmen kann,
mit Chlorsilanen der allgemeinen Formel

R³ₐR⁴_{b}SiCl_{4-(a+b)}

mit R³ und R⁴ = Alkyl, Cycloalkyl, Alkenyl, Cycloalkenyl, Alkoxy, Aryl (mit jeweils 1-8 C-Atomen)
wobei
R³ und R⁴ gleich oder verschieden sein und a und b die Werte 0, 1, 2 annehmen können, und die Summe von a+b 0, 1 oder 2 beträgt.

Die chlorfreien Produkte weisen alle die Strukturelemente# 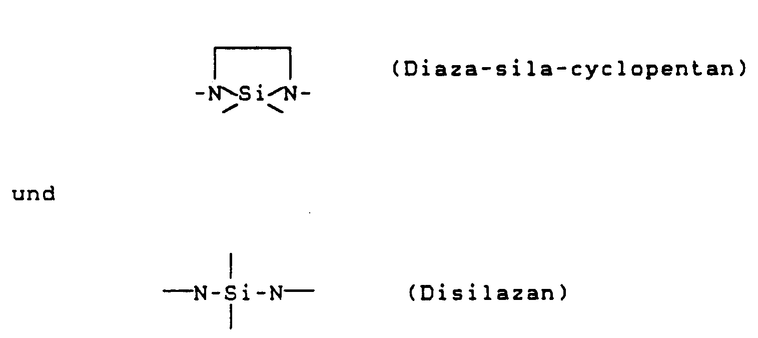
auf.

Als 2-(Aminoethyl)aminopropylalkoxysilane eignen sich insbesondere:
H₂NCH₂CH₂NHCH₂CH₂CH₂-Si(OCH₃)₃
H₂NCH₂CH₂NHCH₂CH₂CH₂-Si(OCH₃)₂CH₃
H₂NCH₂CH₂NHCH₂CH₂CH₂-Si(OC₂H₅)₃
H₂NCH₂CH₂NCH₂CH₂CH₂-Si(OC₂H₅)₂CH₃
H₂NCH₂CH₂NCH₂CH₂CH₂-Si(OCH₃)₂C₂H₅
H₂NCH₂CH₂NCH₂CH₂CH₂-Si(OC₂H₅)₂C₂H₅
H₂NCH₂CH₂NCH₂CH₂CH₂-Si(OC₃H₇)₃
H₂NCH₂CH₂NCH₂CH₂CH₂-Si(OC₃H₇)₂CH₃
H₂NCH₂CH₂NCH₂CH₂CH₂-Si(OC₃H₇)₂C₂H₅
Als Chlorsilane eignen sich besonders:
SiCl₄
CH₃SiCl₃
C₂H₅SiCl₃
C₃H₇SiCl₃
C₂H₃SiCl₃
C₆H₅SiCl₃
C₆H₁₁SiCl₃
CH₃OSiCl₃
C₂H₅OSiCl₃
C₃H₇OSiCl₃
C₄H₉OSiCl₃
(CH₃)₂SiCl₂
(C₂H₅)₂SiCl₂
(C₃H₇)₂SiCl₂
(C₂H₃)₂SiCl₂
(C₆H₅)₂SiCl₂
(C₆H₁₁)₂SiCl₂
(CH₃O)₂SiCl₂
(C₂H₅)₂SiCl₂
(C₃H₇O)₂SiCl₂
(C₄H₉O)₂SiCl₂
(CH₃)(C₂H₅)SiCl₂
(CH₃)(C₃H₇)SiCl₂
(C₂H₅)(C₃H₇)SiCl₂
(CH₃)(C₂H₃)SiCl₂
(CH₃)(C₆H₅)SiCl₂
(C₂H₅)(C₆H₅)SiCl₂
(C₂H₅)(C₂H₃)SiCl₂
(C₆H₅)(C₂H₃)SiCl₂
(CH₃)(CH₃O)SiCl₂
(CH₃)(C₂H₅O)SiCl₂
(CH₃)(C₃H₇O)SiCl₂
(CH₃)(C₄H₉O)SiCl₂
(C₂H₅)(CH₃O)SiCl₂
(CH₂H₅)(C₂H₅O)SiCl₂
(C₂H₅)(C₃H₇O)SiCl₂
(C₂H₅)(C₄H₉O)SiCl₂
(C₆H₅)(CH₃O)SiCl₂
(C₆H₅)(C₂H₅O)SiCl₂
(C₆H₅)(C₃H₇O)SiCl₂
(C₆H₅)(C₄H₉O)SiCl₂
(C₂H₃)(CH₃O)SiCl₂
(C₂H₃)(C₂H₅O)SiCl₂
(C₂H₃)(C₄H₉O)SiCl₂
Umsetzung von Dimethyldichlorsilan mit 2-(Aminoethyl)aminopropyltrimethoxysilan z.B. führt zu einem Produktgemisch, das zu 75 % aus 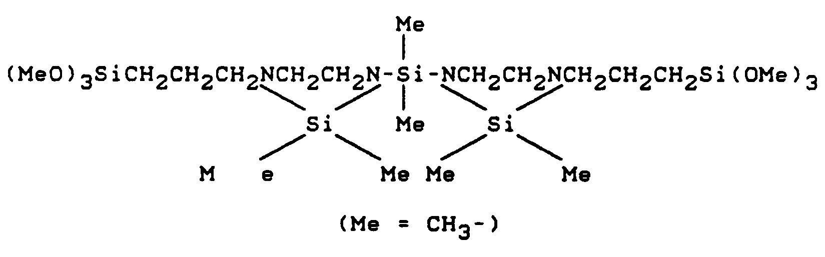
und zu ca. 12 % aus 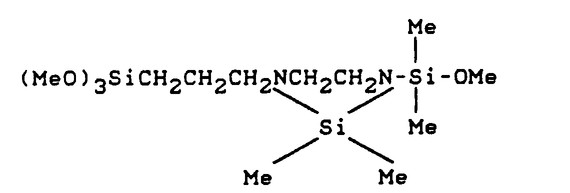
besteht. Dieses Nebenprodukt kann destillativ vom Hauptprodukt abgetrennt werden (s. Beispiel 1).

Das aufgearbeitete chlorfreie Umsetzungsprodukt von Siliciumtetrachlorid und 2-(Aminoethyl)aminopropyltrimethoxysilan weist eine der Stöchiometrie der Reaktion entsprechende Zusammensetzung auf und ist vernetzt. 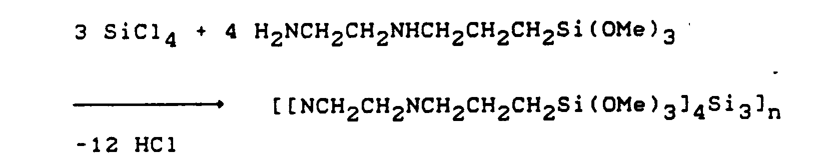
Überraschenderweise wurde gefunden, daß sich die erfindungsgemäßen Umsetzungsprodukte von 2-(Aminoethyl)aminopropylalkoxysilanen und Chlorsilanen als Haftvermittler für 1K- und 2K- Dichtstoffe aus Silicon, Polyurethan oder Polyetherbasis (sog. "modified silicone") eignen.

Sie haben den Vorteil, daß sie aufgrund ihrer hohen Molekulargewichte bzw. ihres polymeren Charakters nicht aus den Dichtstoffen ausdampfen, d.h. die Dichtstoffe sind geruchsneutral.

Weiterhin ist vorteilhaft, daß sie z.B. RTV-1K-Methoxy-Siliconpasten ausgezeichnete Lagerstabilität verleihen (s. Beispiel 2).

Die Erfindung soll anhand der folgenden Beispiele noch näher erläutert werden. Teile- bzw. %-Angaben bedeuten jeweils Gew.-Teile bzw. Gew.-%.

### Beispiel 1

### Umsetzung von 2-(Aminoethyl)aminopropyltrimethoxysilan mit Dimethyldichlorsilan

Zu einer Lösung von 167 Teilen 2-(Aminoethyl)aminopropyltrimethoxysilan und 167 Teilen Triethylamin in 400 Teilen Hexan wurden innerhalb von 1,5 Stunden 97 Teile Dimethyldichlorsilan bei Raumtemperatur getropft. Dabei stieg die Temperatur auf 60°C an. Es wurde 2 Stunden bei Raumtemperatur nachgerührt, über Nacht stehengelassen, dann nochmals 2 Stunden am Rückfluß gekocht. Der ausgefallene Feststoff wurde abfiltriert und zweimal mit je 40 Teilen Hexan gewaschen. Das Filtrat wurde bei 5 mbar bis 60°C ausgeheizt. Der Rückstand (185 Teile) wurde durch GC/MS und ²⁹Si-NMR charakterisiert:
M⁺ = 612; ca. 75 Vol.-%
M⁺ = 366; ca. 12 Vol.-% 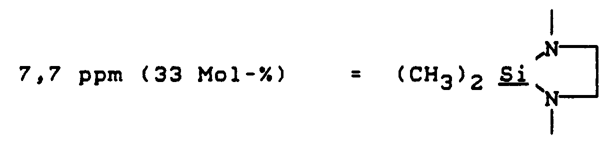 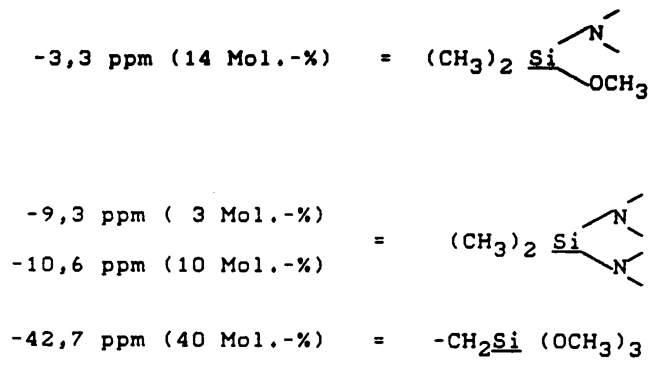
Das Produkt enthält praktisch kein Chlor (gef.: 0,07 % Cl).

### Beispiel 2

In einem Planetenmischer wurden 55 Gew.-Teile eines Polydimethylsiloxans mit -OSi(OCH₃)₂CH₃-Endgruppen, das eine Viskosität von 50 Pas besaß, mit 29 Gew.-Teilen eines Polydimethylsiloxans mit -OSi(CH₃)₃-Endgruppen (Viskosität 0,1 Pas) und mit 9,5 Gew.-Teilen einer pyrogenen Kieselsäure vermischt. Danach wurden 0,5 Gew.-Teile Methyltrimethoxysilan eingemischt. Durch Zugabe von 1,0 Gew.-Teilen des Produktes aus Beispiel 1 und 0,3 Gew.-Teilen (C₄H₉)₂Sn[OCOCH(C₂H₅)C₄H₉]₂ wurde der Ansatz vervollständigt. Die Paste wurde zur Beurteilung der mechanischen Eigenschaften zu einem 2 mm dicken Prüffell ausgezogen, 14 Tage lang bei 23°C und 50 % rel. Luftfeuchtigkeit ausgehärtet und dann nach DIN 53 504 geprüft:

| | |
|---|---|
| Zugefestigkeit: | 2,03 MPa |
| E-Modul 100 %: | 0,41 MPa |
| Bruchdehnung: | 660 % |

Zur Beurteilung des Vernetzunsverhaltens und der Haftung wurde auf einer Glasplatte ein 4 mm dickes Prüffell auf eine Fläche von 40 mal 60 mm aufgetragen. Nach 24 Stunden war das Material bis zur Glasoberfläche durchgehärtet und konnte nicht mehr ohne kohäsiven Riß vom Untergrund abgezogen werden.

Die Lagerstabilität der unvulkanisierten Paste wurde mit Hilfe eines Schnelltests beurteilt. Hierzu wurde der Dichtstoff in Tuben abgefüllt und bei 100°C gelagert. Noch nach bis zu 28-tägiger Lagerung vernetzte das Material zu einem gebrauchsfähigen Elastomer.

## Patentansprüche

1. Umsetzungsprodukte von 2-(Aminoethyl)aminopropylalkoxysilanen der allgemeinen Formel
H₂NCH₂CH₂NHCH₂CH₂CH₂Si(OR¹)ₘR²₃₋ₘ
mit
R¹ und R² = Alkyl, Cycloalkyl, Alkenyl, Cycloalkenyl, (mit jeweils 1-8 C-Atomen)
wobei
R¹ und R² gleich oder verschieden sein können und m die Werte 2 und 3 annehmen kann,
mit Chlorsilanen der allgemeinen Formel
R³ₐR⁴_{b}SiCl_{4-(a+b)}
mit
R³ und R⁴ = Alkyl, Cycloalkyl, Alkenyl, Cycloalkenyl, Alkoxy, Aryl (mit jeweils 1-8 C-Atomen)
wobei
R³ und R⁴ gleich oder verschieden sein können und a und b die Werte 0, 1, 2 annehmen können und die Summe von a und b 0, 1 oder 2 beträgt.

2. Verwendung der Produkte gemäß Anspruch 1 als Haftvermittler für 1K- und 2K-Dichtstoffe auf Basis Silicon.

## Claims

1. Reaction products of 2-(aminoethyl)-aminopropylalkoxy silanes corresponding to the following general formula:
H₂NCH₂CH₂NHCH₂CH₂CH₂Si(OR¹)ₘR²₃₋ₘ
wherein
R¹ and R² = alkyl, cycloalkyl, alkenyl or cycloalkenyl (in each case with 1 to 8 carbon atoms) and
R¹ and R² may be identical or different and m may assume the value 2 or 3
with chlorosilanes corresponding to the following general formula:
R³ₐR⁴_{b}SiCl_{4-(a+b)}
wherein
R³ and R⁴ = alkyl, cycloalkyl, alkenyl, cycloalkenyl, alkoxy or aryl (in each case with 1 to 8 carbon atoms) and
R³ and R⁴ may be identical or different and a and b may assume the values 0, 1 or 2 and the sum of a and b is 0, 1 or 2.

2. Use of the products according to Claim 1 as bonding agents for 1K- and 2K-sealing materials based on silicone.

## Revendications

1. Produits réactionnels de 2-(aminoéthyl)aminopropylalcoxysilanes répondant à la formule générale :
H₂NCH₂CH₂NHCH₂CH₂CH₂Si(OR¹)ₘR²₃₋ₘ
R¹ et R² représentant un groupe alkyle, un groupe cycloalkyle, un groupe alcényle, un groupe cycloalcényle (contenant chacun de 1 à 8 atomes de carbone)
R¹ et R² pouvant être identiques ou différents et m pouvant prendre les valeurs 2 et 3
avec des chlorosilanes répondant à la formule générale
R³ₐR⁴_{b}SiCl_{4-(a+b)}
R³ et R⁴ représentant un groupe alkyle, un groupe cycloalkyle, un groupe alcényle, un groupe cycloalcényle, un groupe alcoxy, un groupe aryle (contenant chacun de 1 à 8 atomes de carbone)
R³ et R⁴ pouvant être identiques ou différents, et a et b pouvant prendre les valeurs 0, 1, 2, et la somme a + b s'élevant à 0, 1 ou 2.

2. Utilisation des produits selon la revendication 1 comme adhésifs pour des matières d'étanchéité 1K et 2K à base de silicone.
